# EUROPEAN PATENT APPLICATION

(11) **EP 3 566 581 A1**
(43) Date of publication of application: **13.11.2019**
(21) Application number: 18171292.8
(22) Date of filing: 08.05.2018
(51) Int. Cl.: A21C 1/00, A21C 1/06, A21C 1/14, B01F 7/00, B01F 13/10, B01F 5/10, B01F 15/02, B01F 15/04, B01F 7/02, A21C 11/20

(54) **MAKING VEGETABLE-SUPPLEMENTED PASTA**

(71) Applicant: Koninklijke Philips N.V., 5656 AE Eindhoven (NL)
(72) Inventor: JIN, Yafang, 5656 AE Eindhoven (NL); XIAO, Weimin, 5656 AE Eindhoven (NL); SU, Guangming, 5656 AE Eindhoven (NL); LU, Weihua, 5656 AE Eindhoven (NL)
(74) Representative: de Haan, Poul Erik

(57) **Abstract**

Presented are pasta makers and methods for making vegetable-supplemented pasta. An example of a proposed pasta maker (200) comprises:

a first chamber (205) having a first mixing arrangement provided therein;

a first perforated plate (260) through which first mixture from the first chamber (205) is adapted to be extruded;

a second chamber (270) adapted to receive first extruded mixture via the first perforated plate (260);

and a second perforated plate (310) through which first extruded mixture from the second chamber (270) is adapted to be extruded.

## Description

### FIELD OF THE INVENTION

This invention relates to making vegetable-supplemented pasta and more particularly to devices and methods for vegetable-supplemented pasta.

### BACKGROUND OF THE INVENTION

Pasta is a staple food in many countries, and is provided in many different forms including elongate string-like or ribbon-like forms such as noodles or spaghetti.

Since it is widely known that vegetables are a good source of many nutrients and their consumption may reduce the risk of various diseases, it has been proposed that the addition of vegetables to pasta can improve the nutritional value of the pasta. The colour of vegetables included in pasta may also make the pasta more attractive in appearance. Pasta that includes vegetables as an ingredient may be referred to as 'vegetable-supplemented pasta' or 'vegetable-added pasta'.

Typically, when making vegetable-supplemented pasta, vegetable puree or juice is required to be prepared before making the pasta. Thus, for consumers who want to make vegetable-supplemented pasta, an appliance, such as a juicer or blender, is required.

Also, it has been found that the use of a conventional pasta maker to make vegetable-supplemented pasta creates pasta that is uneven in colour and texture. This is due to the addition of vegetable ingredient(s) altering properties of the pasta mix from what the pasta mixer is designed for.

### SUMMARY OF THE INVENTION

The invention aims to at least partly fulfil the aforementioned needs. To this end, the invention provides devices, systems and methods as defined in the independent claims. The dependent claims provide advantageous embodiments.

According to an aspect of the invention, there is provided a pasta maker for making vegetable-supplemented pasta. The pasta maker comprises:
a first chamber adapted to receive vegetable-supplemented pasta ingredients; a first mixing arrangement provided in the first chamber and adapted to mix vegetable-supplemented pasta ingredients received in the first chamber so as to form a first mixture; a first perforated plate through which first mixture from the first chamber is adapted to be extruded so as to form a first extruded mixture; and a second perforated plate through which first extruded mixture from the second chamber is adapted to be extruded so as to form a second extruded pasta mixture.

Proposed is a device for making vegetable-supplemented pasta with improved appearance, texture and/or consistency compared to vegetable-supplemented pasta made using a conventional pasta maker. Such a device may enable vegetable-supplemented pasta to be made from fresh vegetables and pasta ingredients in a simple and convenient manner. Proposed embodiments may therefore facilitate the production of home-made vegetable-supplemented pasta, thus helping to provide the health benefits associated with consumption of vegetable-supplemented pasta.

By way of example, a proposed pasta maker for making vegetable-supplemented pasta comprises first and second chambers separated by a perforated plate through which first mixture from the first chamber is extruded and provided to the second chamber. The pasta maker also comprises an outlet and a second perforated plate, wherein the second perforated plate is provided between the second chamber and the outlet. The mixture provided to the second chamber is extruded through the second perforated plate and provided to the outlet. In this way, the device is adapted to perform two (i.e. first and second) extrusion processes one after the other. The first extrusion (e.g. of first mixture from the first chamber) provides a first-level mixture in which the vegetable ingredient(s) is/are broken down and mixed to a first degree. The second extrusion (e.g. of the first-level mixture from the second chamber) then provides a second-level mixture in which the vegetable ingredient(s) is/are further broken down and mixed to a second, greater degree. Such second-level mixture has improved appearance, texture and/or consistency.

Accordingly, there is proposed a pasta making device which is adapted to provide an extra/additional extrusion process before a final pasta mixture is extruded to form the final pasta. The extra/additional extrusion process may crush, mix and/or blend the vegetable ingredient(s) into the conventional pasta ingredient so as provide an improved pasta mixture.

Embodiments may be particularly suited to making noodles, spaghetti or other types of elongate string-like or ribbon-like forms of pasta.

Proposed concepts may thus increase the consumption of vegetable-supplemented pasta by enabling it to be made quickly and easily at home using a single pasta making device.

By way of example, the first chamber may comprise first and second sections. The first mixing arrangement may then be adapted to mix vegetable-supplemented pasta ingredients in the first section and to urge the first mixture to the second section and against the first perforated plate. In this way, a single mechanism or arrangement may be adapted to both mix the ingredients and press the first mixture against the first perforated plate so to automatically extrude the mixture.

By way of example, the first mixing arrangement may comprise a screw that is adapted to rotate within the first chamber. A simple mechanical arrangement that is cheap and easy to implement may therefore be employed, thus avoiding the need for complex and/or costly mixing arrangements.

In another example, the first mixing arrangement may comprise a rotatable member having a mixing portion and threaded portion. The mixing portion may comprise one or more protrusions for mixing vegetable-supplemented pasta ingredients through rotation of the rotatable member. The threaded portion may comprise a helical flange for urging the first mixture in a direction towards second section or first perforated plate through rotation of the rotatable member. Such a mixing arrangement may facilitate a combined mixing, kneading and extruding process through simple rotation of the member that is cheap to implement and easy to control. Further, the first mixing arrangement may be adapted to be operable in a first mode, wherein the first mixing arrangement is adapted to mix vegetable-supplemented pasta ingredients in the first section, and a second mode, wherein the first mixing arrangement is adapted to urge the first mixture to the second section and against the first perforated plate. Such an arrangement may enable the mixing process to be undertaken separately from extrusion, thus helping to ensure that the ingredients are adequately mixed prior to being extruded. For instance, in the first mode, the threaded portion may prevent the first mixture from being urged against the first perforated plate (e.g. by urging the first mixture in a direction away from the first perforated plate), and thus ensure that the ingredients are retained in the first chamber for continued mixing. Once the ingredients have been mixed for a predetermined amount of time, for example, the first mixing arrangement may then be switched to the second mode so that the first mixture is then urged to the second section and against the first perforated plate.

By way of further example, in the first mode, the rotatable member may be adapted to rotate in a first direction of rotation, whereas, in the second mode, the rotatable member may be adapted to rotate in a second, opposite direction of rotation. Simple switching of a direction of rotation of an element of the first mixing arrangement (e.g. by changing the driving direction of a motor) may be used to control mixing of ingredients and extrusion of the first mixture.

Embodiments may further comprise a second mixing arrangement provided in the second chamber. The second mixing arrangement may be adapted to mix first extruded mixture received in the second chamber. In this way, embodiments may be adapted to further mix the first extruded mixture so as to further improve its consistency and/or texture prior to being extruded through the second perforated plate.

Further, the second chamber may comprise third and fourth sections. The second mixing arrangement may then be adapted to mix first extruded mixture received in the second chamber and to urge the second mixture to the fourth section and against the second perforated plate. In this way, embodiments may be adapted to further mix the first extruded mixture so as to further improve its consistency and/or texture prior to being extruded through the second perforated plate. Further, a single mechanism or arrangement may be adapted to both mix the first extruded mixture and press the second mixture against the second perforated plate so to automatically extrude the mixture.

For example, the second mixing arrangement may comprise a screw that is adapted to rotate within the second chamber. A simple mechanical arrangement that is cheap and easy to implement may therefore be employed, thus avoiding the need for complex and/or costly mixing arrangements in the second chamber.

In another example, the second mixing arrangement may comprise a second rotatable member having a mixing portion and threaded portion. The mixing portion may comprise one or more protrusions for mixing first extruded mixture by rotation of the second rotatable member. The threaded portion may comprise a helical flange for urging the second mixture in a direction towards the fourth section or second perforated plate by rotation of the second rotatable member. Such a mixing arrangement may facilitate a combined mixing, kneading and extruding process within the second chamber through simple rotation of an elongated member that is cheap to implement and easy to control. Further, the second mixing arrangement may be adapted to be operable in a first (mixing) mode, wherein the second mixing arrangement is adapted to mix first extruded mixture in the third section, and a second (extrusion) mode, wherein the second mixing arrangement is adapted to urge the second mixture to the fourth section and against the second perforated plate. Such an arrangement may enable the mixing process in the second chamber to be undertaken separately from extrusion, thus helping to ensure that the ingredients are mixed thoroughly prior to being extruded for a second time. For instance, in the first (mixing) mode, the threaded portion may prevent the second mixture from being urged against the second perforated plate (e.g. by urging the second mixture in a direction away from the second perforated plate), and thus help to ensure that the first extruded mixture is retained in the second chamber for continued mixing. Once the first extruded mixture has been mixed for a predetermined amount of time, for example, the second mixing arrangement may then be switched to the second mode so that the second mixture is then urged to the fourth section and against the second perforated plate. By way of further example, in the first mode of the second mixing arrangement, the rotatable member maybe adapted to rotate in a first direction of rotation, whereas, in the second mode, the rotatable member may be adapted to rotate in a second, opposite direction of rotation. In this way, simple reversing of a direction of rotation of an element of the second mixing arrangement (e.g. by changing the driving direction of a motor) may be used to control mixing of first extruded mixture and extrusion of the second mixture.

In some proposed embodiments, the first and second chambers may be one and the same, and the first and second perforated plates may also be one and the same. The pasta maker may then further comprise a mixture re-supply arrangement adapted to receive first extruded mixture and to provide the first extruded mixture back to the same (i.e. first) mixing chamber. The first chamber may thus perform the technical function of the second chamber and the first perforated plate may perform the technical function of the second perforated plate. In other words, in some embodiments, rather than the pasta maker having two chambers (e.g. first and second chambers being different and separate from each other), the pasta maker may only comprise a single chamber, a single mixing arrangement and a single perforated plate.

Proposed embodiments may thus provide a pasta maker for making vegetable-supplemented pasta, wherein the pasta maker comprises: a chamber adapted to receive vegetable-supplemented pasta ingredients; a mixing arrangement provided in the chamber and adapted to mix vegetable-supplemented pasta ingredients received in the chamber so as to form a first mixture; a perforated plate through which first mixture from the chamber is adapted to be extruded so as to form a first extruded mixture; and a mixture re-supply arrangement adapted to receive first extruded mixture from the first perforated plate and to provide the first extruded mixture back to the first chamber. Automatic delivery of first extruded mixture back to the chamber may thus be provided so that the first extruded mixture can be mixed and extruded once again (i.e. for a second time). This may avoid the need for a user to manually re-supply or re-feed extruded mixture back to the chamber of the pasta maker, thus helping to reduce user involvement, avoid excessive handling of mixture and/or increase user convenience.

At least one of the first and second perforated plates may comprise a rigid sheet or plate with an array of apertures or holes formed therein. A perforated plate employed by the invention may, for example, comprise a grating surface against which a pasta mixture can be pressed and pushed through the grating holes provided therein.

Proposed embodiments may comprise a steaming unit adapted to steam received vegetable-supplemented pasta ingredients. Embodiments may thus facilitate the steaming of vegetable ingredients, and this may be done prior to being mixed with other pasta ingredients. Embodiments may therefore cater for the use of vegetables that require steaming in order to be used in vegetable-supplemented pasta.

In an embodiment, the pasta maker may further comprise a weight-sensing unit adapted to weigh received vegetable-supplemented pasta ingredients and to provide an output signal representative of a sensed weight of vegetable-supplemented pasta ingredients. This may provide the benefit of informing a user and/or other part of the device with information about how much of each of the ingredients has been provided. Useful information may thus be provided which may be helpful for ensuring that correct amounts and/or ratios of ingredients are used.

Also, the pasta maker may further comprise a fluid supply unit adapted to supply fluid to the first chamber based on an output signal from the weight sensing unit and a predetermined target ratio of vegetable-supplemented pasta ingredients. Such embodiments may therefore automatically account for the water content of ingredients provided by a user for example, so as to ensure that a preferred or target amount of water is provided when vegetable-supplemented pasta is being made with an embodiment. Proposed embodiments may therefore help a user by automatically supplying and/or adjusting an amount of water in the pasta ingredients, thus simplifying a pasta making process for a user.

By way of example, the fluid supply unit may be adapted to determine an amount of water in vegetable-supplemented pasta ingredients received in the first chamber based on an output signal from the weight sensing unit. The fluid supply unit may also be adapted to supply fluid to the first chamber based on the determined amount of water in vegetable-supplemented pasta ingredients received in the first chamber and the predetermined target ratio of vegetable-supplemented pasta ingredients. Automatic optimization of an amount of water used may thus be provided by proposed embodiments.

By way of example, the predetermined target ratio of vegetable-supplemented pasta ingredients may comprise a ratio of flour to water in the range of 2.4:1 - 3.2:1, and preferably equal to 250:90. Embodiments may therefore facilitate the automatic use of an ideal or preferred amount of water when making vegetable-supplemented pasta. This may make a process of making vegetable-supplemented pasta simple and easy whilst also ensuring the pasta is of optimum consistency and/or texture (e.g. according to user preference or established guidelines).

Proposed embodiments support the provision and/or production of vegetable-supplemented pasta in an improved (e.g. simple and user-friendly) manner. Simple and intuitive production of vegetable-supplemented pasta may thus be facilitated by proposed embodiments.

According to another aspect of the invention, there is provided a method of operating a pasta maker for making vegetable-supplemented pasta, the pasta maker comprising: a first chamber having a first mixing arrangement provided therein; a first perforated plate through which first mixture from the first chamber is adapted to be extruded; a second chamber adapted to receive first extruded mixture via the first perforated plate; and a second perforated plate through which first extruded mixture from the second chamber is adapted to be extruded. The method comprises: receiving vegetable-supplemented pasta ingredients in the first chamber; operating the first mixing arrangement to mix the vegetable-supplemented pasta ingredients received in the first chamber so as to form a first mixture; extruding the first mixture through the first perforated plate; receiving, via the first perforated plate, first extruded mixture in the second chamber; and extruding the first extruded mixture received in the second chamber through the second perforated plate so as to form a second extruded pasta mixture.

Proposed embodiments may thus help a user to produce vegetable-supplemented pasta with minimal involvement. Such a process may enable a user simply add ingredients to a proposed pasta maker, thus reducing complexity or confusion that may otherwise be caused by requiring a user to use multiple devices and/or undertake multiple processes.

In some embodiments, the pasta maker may further comprise a weight sensing unit, and the method may further comprise controlling the weight sensing unit to weigh vegetable-supplemented pasta ingredients received in the first chamber and to provide an output signal representative of a sensed weight of vegetable-supplemented pasta ingredients received in the first chamber.

By way of further example, the pasta maker may further comprise a fluid supply unit, and the method may further comprise controlling a fluid supply unit to supply fluid to the first chamber based on an output signal from the weight sensing unit and a predetermined target ratio of vegetable-supplemented pasta ingredients.

Further, the method may also comprise controlling the fluid supply unit to determine an amount of water in vegetable-supplemented pasta ingredients received in the first chamber based on an output signal from the weight sensing unit, and to supply fluid to the first chamber based on the determined amount of water in vegetable-supplemented pasta ingredients received in the first chamber and the predetermined target ratio of vegetable-supplemented pasta ingredients. For instance, the predetermined target ratio of vegetable-supplemented pasta ingredients may comprise a ratio of a flour to water in the range of 2.4:1 - 3.2:1, and preferably equal to 250:90.

According to another aspect, there is provided a computer program product for operating a pasta maker for making vegetable-supplemented pasta, the pasta maker comprising: a first chamber having a first mixing arrangement provided therein; a first perforated plate through which first mixture from the first chamber is adapted to be extruded; a second chamber adapted to receive first extruded mixture via the first perforated plate; and a second perforated plate through which first extruded mixture from the first second chamber is adapted to be extruded, wherein the computer program product comprises a computer-readable storage medium having computer-readable program code embodied therewith, the computer-readable program code configured to perform all of the steps of a proposed embodiment.

These and other aspects of the invention will be apparent from and elucidated with reference to the embodiment(s) described hereinafter.

### BRIEF DESCRIPTION OF THE DRAWINGS

Examples in accordance with aspects of the invention will now be described in detail with reference to the accompanying schematic drawings, in which:
Figure 1 is an exemplary flow diagram of a method for making vegetable-supplement pasta according to an embodiment;
Figure 2 is a simplified cross-sectional diagram of a pasta maker for making vegetable-supplemented pasta according to an embodiment;
Figure 3 depicts a modified version of the pasta maker of Figure 2;
Figure 4 depicts a simplified cross-sectional diagram of a pasta maker for making vegetable-supplemented pasta according to another embodiment; and
Figure 5 is a simplified block diagram of a computer within which one or more parts of an embodiment may be employed.

### DETAILED DESCRIPTION OF THE EMBODIMENTS

Illustrative embodiments may be utilized for making vegetable-supplemented pasta, such as noodles, spaghetti or other types of elongate string-like or ribbon-like forms of pasta. In order to provide a context for the description of elements and functionality of the illustrative embodiments, the Figures are provided hereafter as example environments in which aspects of the illustrative embodiments may be implemented. It should therefore be appreciated the Figures are only examples and are not intended to assert or imply any limitation with regard to the environments or systems in which aspects or embodiments of the present invention may be implemented.

Embodiments of the present invention are directed toward enabling the preparation of vegetable-supplemented pasture mixture that may have improved appearance, texture and/or consistency. Proposed concepts may thus help to increase the consumption of vegetable-supplemented pasta by enabling it to be made quickly and easily at home.

According to proposed concepts, there may be provided methods or device for making vegetable-supplemented pasta which employ two (i.e. first and second) extrusion processes one after the other. For example, after mixing vegetable-supplemented pasta ingredients, a first extrusion process provides a first-level mixture in which the vegetable ingredient(s) is/are broken down and mixed to a first degree. A second extrusion (e.g. of the first-level mixture) then provides a second-level mixture in which the vegetable ingredient(s) is/are further broken down and mixed to a second, greater degree. Such a second-level mixture has improved appearance, texture and/or consistency when compared to conventional approaches that only employ a single mixing, kneading and extrusion process.

Embodiments may for example provide a pasta making device which is adapted to provide an extra/additional extrusion process before a final mixture is extruded to form the final vegetable-supplemented pasta. The extra/additional extrusion process may crush, mix and/or blend the vegetable ingredient(s) into the conventional pasta ingredient so as provide an improved pasta mixture.

Illustrative embodiments may be utilized to make different types of vegetable-supplemented pasta, including vegetable-supplemented noodles for example. In order to provide a context for the description of elements and functionality of the illustrative embodiments, the Figures are provided hereafter as examples of how aspects of the illustrative embodiments may be implemented. It should therefore be appreciated the Figures are only examples and are not intended to assert or imply any limitation with regard to the environments, systems or methods in which aspects or embodiments of the present invention may be implemented.

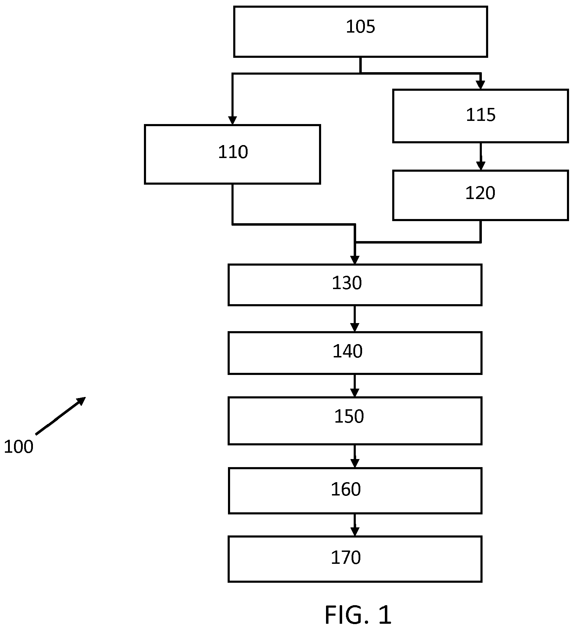

Referring to Figure 1, there is depicted a flow-diagram of a method 100 for making vegetable-supplement pasta according to an embodiment.

The method begins in step 105 wherein the vegetable ingredients are prepared for use. Here, such preparation includes cutting the vegetable ingredients into pieces or chunks that are small enough to be placed in to a receiving portion (e.g. chamber) of the pasta maker.

If the vegetable ingredients comprise leafy vegetables, the method then proceeds to step 110 of adding leafy vegetable ingredients to a first chamber pasta maker according to a proposed embodiment. If, on the other hand, the vegetable ingredients comprise root vegetables, the method then proceeds to steps: 115 of adding the root vegetable ingredients to a first chamber pasta maker according to a proposed embodiment; and 120 of steaming the root vegetable ingredients.

After the vegetable ingredients have been provided to the pasta maker, the method proceeds to step 130 wherein the flour and water ingredients are also added to the first chamber of the pasta maker.

Next, in step 140, the pasta maker is operated to mix the vegetable-supplemented pasta ingredients so as to form a first mixture. The first mixture is then extruded through a first perforated plate in step 150 and received 160 by a second chamber of the pasta maker. Finally, in step 170, the first mixture is mixed one again and then extruded through a second perforated plate so as to form a second extruded pasta mixture. Thus, the second extruded pasta mixture may be thought of as being a second-level pasta mixture that has undergone two rounds of extrusion so as to have improved appearance, texture and/or consistency.

From the above description of the method depicted in Figure 1, it will be appreciated that the proposed method for making vegetable-supplement pasta comprises a second (i.e. additional) extrusion which further crushes the vegetable ingredients and provides a well-mixed final vegetable-supplemented pasta mixture.

By way of demonstrating the proposed method, experiments were carried out by the inventors wherein leafy vegetable ingredients were used. For conventional noodles, a preferred ratio of flour and water may be 250: 90. To maintain the texture of the noodle with leafy vegetable ingredients (such as Chinese cabbage) supplemented into the mixture, the water amount was adjusted correspondingly as detailed in Table 1 below (wherein the amount of water in the vegetable ingredient(s) is calculated according to the USDA database).

**Table 1**

| Group | Flour (g) | Cabbage (g) | Water in vegetable (g) | Added water (g) |
|---|---|---|---|---|
| Normal noodle | 250 | 0 | 0 | 90 |
| Chinese Cabbage noodle 1 | 250 | 80 | 75.2 | 14.8 |
| Chinese Cabbage noodle 2 | 250 | 95.8 | 90.1 | 0.0 |

An embodiment of a proposed vegetable-supplemented noodle making procedure was undertaken as follows: (i) the Chinese cabbage was chopped; (ii) the Chinese cabbage, flour and water ingredients were provided to the pasta maker; (iii) the pasta maker was operated in accordance with a proposed embodiment so as to extrude noodles for a first time; (iv) the extruded noodles were then provided back to the pasta maker and the pasta maker was operated in accordance with a proposed embodiment so as to extrude noodles for a second time.

During the first round of extrusion, the color of noodles was uneven due to the uneven distribution of the vegetable ingredient(s). Also, the noodles were easy to broke and difficult to extruded, especially when the vegetable amount was increased. However, after the second round of extrusion, the color of the noodles was more even due to the improved distribution of the vegetable ingredient(s). Also, the noodles provided from the second round of extrusion were less-easy to break.

It is noted that, with the addition of the Chinese cabbage, the fiber amount of the noodles is increased. For Chinese cabbage noodle 1, the fiber content increase 62% compared with normal (non-vegetable-supplemented) noodles. For Chinese cabbage noodle 2, the fiber content increase 74% compared with normal (non-vegetable-supplemented) noodle.

Further experiments were carried out by the inventors wherein root vegetable ingredients were used to make noodles. To maintain the texture of the noodle, when a root vegetable (such as carrot) is added into the mixture, the water amount was adjusted correspondingly as detailed in Table 2 below (wherein the amount of water in vegetable ingredient(s) is calculated according to the USDA database).

**Table 2**

| Group | Flour (g) | Carrot (g) | Water in vegetable (g) | Added water (g) |
|---|---|---|---|---|
| Normal noodle | 250 | 0 | 0 | 90 |
| Carrot noodle 1 | 250 | 60 | 52.8 | 37.2 |
| Carrot noodle 2 | 250 | 80 | 70.4 | 19.6 |

An embodiment of a proposed vegetable-supplemented noodle making procedure was undertaken as follows: (i) the carrot was chopped; (ii) the carrot was steamed for 15-20 minutes (so as to soften the texture of the carrot); (iii) the steamed carrot, flour and water ingredients were provided to the pasta maker; (iv) the pasta maker was operated in accordance with a proposed embodiment so as to extrude noodles for a first time; (iv) the extruded noodles were then provided back to the pasta maker and the pasta maker was operated in accordance with a proposed embodiment so as to extrude noodles for a second time.

With the addition of the carrot, the fiber amount (calculation according to the USDA database) of the noodles is increased. For carrot noodle 1, the fiber content increase 108% compared with normal (non-vegetable-supplemented) noodles. For carrot noodle 2, the fiber content increase 142% compared with normal (non-vegetable-supplemented) noodles.

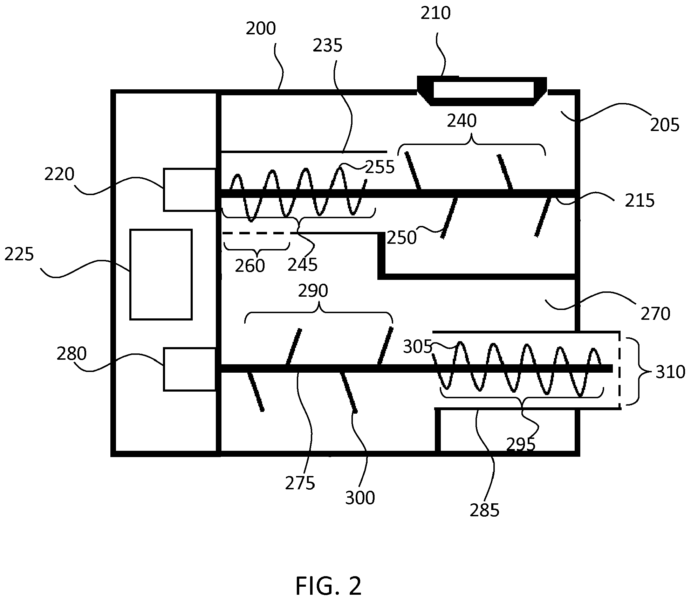

Referring now to Figure 2, there is depicted a simplified cross-sectional view of a pasta maker for making vegetable-supplemented pasta according to an embodiment. The pasta maker 200 comprises a first chamber 205 adapted to receive vegetable-supplemented pasta ingredients (via an aperture covered by a removable lid 210). A first mixing arrangement 215 is provided in the first chamber 205 and adapted to mix vegetable-supplemented pasta ingredients received in the first chamber 205 so as to form a first mixture. Here, the first mixing arrangement 215 comprises an elongated member 215 that is adapted to be rotated about its longitudinal axis by a first motor 220 under the control of a control unit 225.

The first chamber 205 comprises first and second sections, wherein the second section is defined by a hollow cylinder 235 provided in the first chamber 205. The volume of space external to the cylinder is the first section of the first chamber 205, whereas the volume of space internal to the cylinder is the second section of the first chamber 205. The elongated member 215 is arranged such that it extends through both the first and second sections of the first chamber, and such that the longitudinal axis of the elongate member 215 is co-located with (i.e. in substantially the same position and direction of) the central axis of the hollow cylinder 235.

The elongated member 215 has a mixing portion 240 (positioned in the first section of the first chamber 205) and a threaded portion 245.

The mixing portion 240 comprises a plurality of protrusions 250 for mixing vegetable-supplemented pasta ingredients as the elongated member 215 rotates. Thus, the elongated member 215 is adapted to mix vegetable-supplemented pasta ingredients in the first section of the first chamber 205.

The threaded portion 245 comprise a helical flange 255 for urging a mixture of ingredients in a direction substantially parallel to the longitudinal axis of the elongated member 215 (depending on the direction of threading and the rotation direction of the elongated member). In this way, when rotated in a first direction of rotation, the helical flange 255 is adapted to urge (e.g. pull or draw) mixture into the cylinder (from the first section of the first chamber 205) and against a first perforated plate provided in the first chamber 205.

The first mixing arrangement 215 is adapted to be operable in a first mode, wherein the first mixing arrangement 215 (more specifically, the protrusions 250 of the elongated member 215) mix vegetable-supplemented pasta ingredients in the first section of the first chamber 205. The first mixing arrangement 215 is also adapted to operate in a second, alternative mode, wherein the first mixing arrangement 215 (more specifically, the screw-like helical flange 255) moves the mixture to the second section of the first chamber and pushes the mixture against the first perforated plate 260. It will be understood that such an arrangement enables the mixing of the ingredients in the first chamber 205 to be undertaken separately from extrusion, thus helping to ensure that the ingredients are adequately mixed prior to being urged against the first perforated plate 260.

In particular, in the first mode, the first motor 220 is controlled to rotate the elongated member 215 in a first direction of rotation so that the threaded portion 245 prevents mixture from being urged against the first perforated plate 260 (e.g. by moving mixture in a direction towards the mixing portion 240 of the elongated member 215 and away from the first perforated plate 260). This helps to maintain ingredients in the first section of first chamber 205 for continued mixing. Once the ingredients have been mixed for a predetermined amount of time (e.g. so as to provide a first mixture), for example, the first mixing arrangement may then be switched to the second mode, wherein the first motor 220 is controlled to rotate the elongated member 215 in a second, opposite direction of rotation so that the threaded portion 245 moves mixture along the internal volume of the cylinder 235 (e.g. by moving mixture in a direction away from mixing portion of the elongated member 215 and towards the first perforated plate 260) and urges the mixture against the first perforated plate 260.

When urged against the first perforated plate 260, first mixture from the first chamber 205 is extruded so as to form a first extruded mixture.

The pasta maker 200 further comprises a second chamber 270 adapted to receive the first extruded mixture (i.e. first mixture extruded through the first perforated plate 260).

A second mixing arrangement 275 is provided in the second chamber 270 and adapted to mix the first extruded mixture in the second chamber 270 so as to form a second mixture. Here, the second mixing arrangement 275 comprises an elongated member 275 that is adapted to be rotated about its longitudinal axis by a second motor 280 under the control of the control unit 225.

Two sections of the second chamber may be defined such that the second chamber 270 comprises third and fourth sections, wherein the fourth section is defined by a second hollow cylinder 285 provided in the second chamber 270. The volume of space external to the second hollow cylinder 285 is the third section of the second chamber 270, whereas the volume of space internal to the second hollow cylinder 285 is the fourth section of the second chamber 270. The elongated member 275 is arranged such that it extends through both the third and fourth sections of the second chamber 270, and such that the longitudinal axis of the elongated member 275 is co-located with (i.e. in substantially the same position and direction of) the central axis of the second hollow cylinder 285.

The elongated member 275 has a mixing portion 290 (positioned in the third section of the second chamber 270) and a threaded portion 295.

The mixing portion 290 comprises a plurality of protrusions 300 for mixing first extruded mixture as the elongated member 275 rotates. Thus, the elongated member 275 is adapted to mix first extruded mixture in the third section of the second chamber 270.

The threaded portion 295 comprises a helical flange 305 for urging a first extruded mixture in a direction substantially parallel to the longitudinal axis of the elongated member 295 (depending on the direction of threading and the rotation direction of the elongated member 275). In this way, when rotated in a first direction of rotation, the helical flange 305 is adapted to urge (e.g. pull or draw) first extruded mixture into the second hollow cylinder 285 (from the third section of the second chamber 270) and against second perforated plate 310 provided in the second chamber 270.

The second mixing arrangement 275 is adapted to be operable in a first mode, wherein the second mixing arrangement 275 (more specifically, the protrusions 300 of the elongated member 275) mix first extruded mixture in the third section of the second chamber 270. The second mixing arrangement 275 is also adapted to operate in a second, alternative mode, wherein the second mixing arrangement 275 (more specifically, the screw-like helical flange 305) moves the first extruded mixture to the fourth section of the second chamber 270 and pushes the first extruded mixture against the second perforated plate 310. It will be understood that such an arrangement enables the mixing of the first extruded mixture in the second chamber 270 to be undertaken separately from extrusion, thus helping to ensure that the first extruded mixture is thoroughly mixed prior to being urged against the second perforated plate 310.

In particular, in the first mode of the second mixing arrangement 275, the second motor 280 is controlled to rotate the elongated member 275 in a first direction of rotation so that the threaded portion 305 prevents first extruded mixture from being urged against the second perforated plate 310 (e.g. by moving first extruded mixture in a direction towards the mixing portion 290 of the elongated member 275 and away from the second perforated plate 310). This helps to maintain first extruded mixture in the third section of second chamber 270 for continued mixing. Once the first extruded mixture has been mixed for a predetermined amount of time so as to form a second mixture, for example, the second mixing arrangement may then be switched to the second mode, wherein the second motor 280 is controlled to rotate the elongated member 275 in a second, opposite direction of rotation so that the threaded portion 305 moves second mixture along the internal volume of the second hollow cylinder 285 (e.g. by moving the second mixture in a direction away from mixing portion 290 of the elongated member 275 and towards the second perforated plate 310) and urges the mixture against the second perforated plate 310.

When urged against the second perforated plate 310, second mixture from the second chamber 270 is extruded so as to form a second extruded pasta mixture.

Accordingly, from the above description of the embodiment of Figure 2, it will be understood that an exemplary procedure for using the pasta maker 200 to make leafy vegetable-supplemented noodles may be summarized as follows:
The leafy vegetables are chopped and prepared by a user;
The user weighs suitable prepared vegetables and flour, and subsequently puts the weighed ingredients into the first chamber 205;
   The user turns on and operate the device 200 to cause the first motor 220 to firstly rotate the first mixing arrangement 215 in a first direction so as to mix the ingredients and then secondly rotate the first mixing arrangement 215 in the opposite direction so as to urge the mixed ingredients against the first perforated plate 260;
   The mixed ingredients are extruded through the first perforated plate 260 so as to provide a first extruded mixture which is then received in the second chamber 270; The device 200 then controls the second motor 280 to firstly rotate the second mixing arrangement 275 in a first direction so as to mix the received first extruded mixture and then secondly rotate the second mixing arrangement 275 in the opposite direction so as to urge the mixture against the second perforated plate 310;
   The mixture is extruded through the second perforated plate 310 so as to provide a second extruded pasta mixture; and
Cook or store the second extruded pasta mixture.

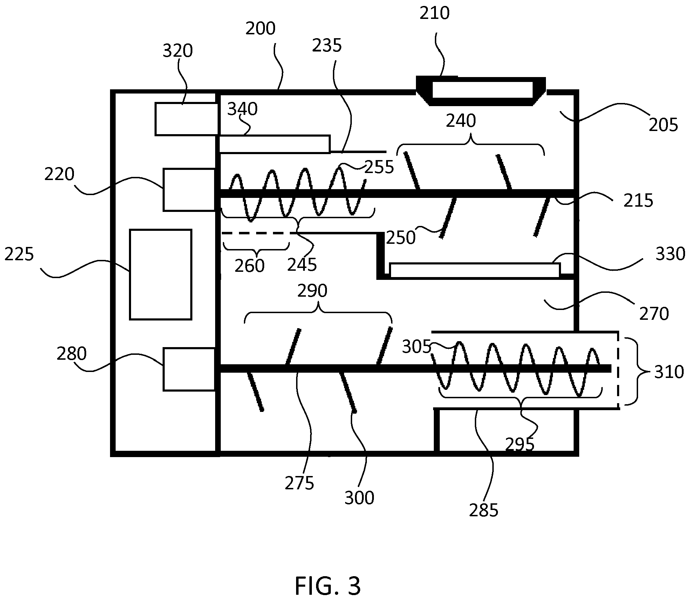

Referring now to Figure 3, there is depicted a modification to the embodiment of Figure 2. In particular, the embodiment of Figure 3 comprises further features in addition to all of the features of the embodiment depicted in Figure 2. For this reason, features common to both embodiments are identified the same reference numerals. Also, to avoid unnecessary repetition, description of such shared features is omitted from the following description of Figure 3.

In particular, the pasta maker 200 of Figure 3 comprises a steaming unit 320 that is adapted to steam vegetable-supplemented pasta ingredients received in the first chamber 205. This enables the steaming of root vegetable ingredients, for example, and such steaming may be controlled to be undertaken prior mixing the root vegetable ingredients with other pasta ingredients. It will therefore be appreciated that the embodiment of Figure 3 is adapted to cater for the use of vegetables that require steaming in order to be used in vegetable-supplemented pasta.

The pasta maker 200 of Figure 3 also comprises a weight sensing unit 330 adapted to weigh vegetable-supplemented pasta ingredients received in the first chamber 205 and to provide an output signal representative of a sensed weight of vegetable-supplemented pasta ingredients received in the first chamber 205. This output signal can be used, for example, to provide a user and/or other component of the past maker 200 with information about how much of each of the ingredients has been provided.

Here, the pasta maker 200 further comprises a fluid supply unit 340 that is adapted to supply fluid to the first chamber 205 based on an output signal from the weight sensing unit 330. More specifically, the fluid supply unit 340 uses information from the output signal in combination with a predetermined target ratio of vegetable-supplemented pasta ingredients to determine how much fluid to supply to the first chamber 205. In this way, the water content of ingredients can be catered for, so as to ensure that a preferred or target amount of water is provided when vegetable-supplemented pasta is being made by the pasta maker 200. By automatically supplying and/or adjusting an amount of water used when mixing the pasta ingredients in the first chamber, the embodiment of Figure 3 can simplify a pasta making process for a user.

In more detail, the fluid supply unit 340 is adapted to determine an amount of water in vegetable-supplemented pasta ingredients received in the first chamber 205 based on an output signal from the weight sensing unit 330. The fluid supply unit 340 is also adapted to supply fluid to the first chamber 205 based on the determined amount of water in vegetable-supplemented pasta ingredients received in the first chamber 205 and a predetermined target ratio of vegetable-supplemented pasta ingredients. By way of example, the predetermined target ratio of vegetable-supplemented pasta ingredients employed by the embodiment of Figure 3 comprises a ratio of flour to water in the range of 2.4:1 - 3.2:1, and is preferably substantially equal to 250:90. This facilitates the automatic use of an optimal or preferred amount of water when making vegetable-supplemented pasta. A process of making vegetable-supplemented pasta is thus made simple and easy whilst also ensuring the pasta is of optimum consistency and/or texture (e.g. according to user preference or established guidelines).

Although the embodiments described above employ two chambers for mixing and extruding ingredients (i.e. first and second chambers), it is to be understood that embodiments of the proposed invention need not be limited to employing two chambers only.

For example, according to some proposed embodiments, there may be provided a pasta maker that comprises a single chamber and a mixture re-supply arrangement adapted to receive an extruded mixture and to provide the extruded mixture back to the single chamber. In other words, in some embodiments, rather than the pasta maker having two chambers (e.g. first and second chambers being different and separate from each other), the pasta maker may only comprise single chamber, single mixing arrangement and a single perforated plate.

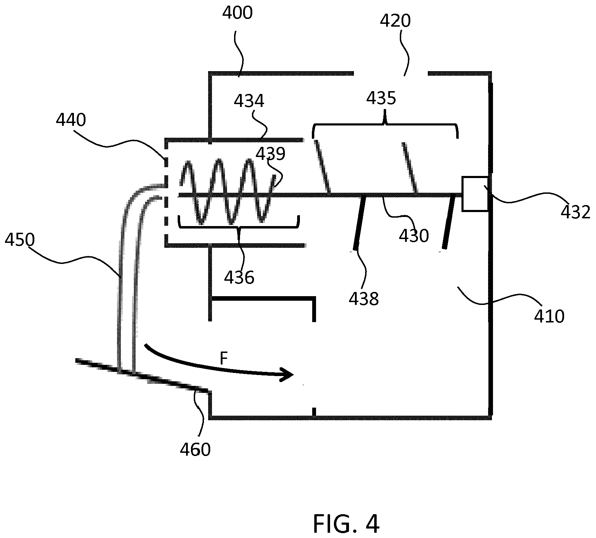

Referring to Figure 4, there is depicted a simplified cross-section diagram of a pasta maker 400 according to an embodiment, wherein the pasta maker 400 comprise a single chamber 410 for mixing, kneading and extruding vegetable-supplemented pasta ingredients.

The chamber 410 is adapted to receive vegetable-supplemented pasta ingredients (via an input orifice or aperture 420). A mixing arrangement 430 is provided in the chamber and adapted to mix vegetable-supplemented pasta ingredients received in the chamber 410 so as to form a first mixture.

Here, the mixing arrangement 430 is similar to the first mixing arrangement 215 of Figures 2 and 3, and thus comprises an elongated member 430 that is adapted to be rotated about its longitudinal axis by a motor 432.

The chamber 410 comprises first and second sections, wherein the second section is defined by a hollow cylinder 434 provided in the chamber 410. The volume of space external to the cylinder 434 is the first section of the chamber 410, whereas the volume of space internal to the cylinder 434 is the second section of the chamber 410. The elongated member 430 is arranged such that it extends through both the first and second sections of the chamber, and such that the longitudinal axis of the elongate member 430 is co-located with (i.e. in substantially the same position and direction of) the central axis of the hollow cylinder 434.

The elongated member 430 has a mixing portion 435 (positioned in the first section of the chamber 410) and a threaded portion 436.

The mixing portion 435 comprises a plurality of protrusions 438 for mixing vegetable-supplemented pasta ingredients as the elongated member 430 rotates. Thus, the elongated member 430 is adapted to mix vegetable-supplemented pasta ingredients in the first section of the chamber 410.

The threaded portion 436 comprise a helical flange 439 for urging a mixture of ingredients in a direction substantially parallel to the longitudinal axis of the elongated member 430 (depending on the direction of threading and the rotation direction of the elongated member). In this way, when rotated in a first direction of rotation, the helical flange 439 is adapted to urge (e.g. pull or draw) mixture into the cylinder 434 (from the first section of the chamber 410) and against a 440 perforated plate provided at an end of the cylinder 434.

The mixing arrangement 430 is adapted to be operable in a first mode, wherein the mixing arrangement 430 (more specifically, the protrusions 438 of the elongated member 430) mix vegetable-supplemented pasta ingredients in the first section of the chamber 410. The mixing arrangement 430 is also adapted to operate in a second, alternative mode, wherein the mixing arrangement 430 (more specifically, the screw-like helical flange 439) moves the mixture to the second section of the chamber 410 and pushes the mixture against the perforated plate 440. It will be understood that such an arrangement enables the mixing of the ingredients in the chamber 410 to be undertaken separately from extrusion, thus helping to ensure that the ingredients are adequately mixed prior to being urged against the perforated plate 440.

In particular, in the first mode, the motor 432 is controlled to rotate the elongated member 430 in a first direction of rotation so that the threaded portion 436 prevents mixture from being urged against the perforated plate 440 (e.g. by moving mixture in a direction towards the mixing portion 435 of the elongated member 430 and away from the first perforated plate 440). This helps to maintain ingredients in the first section of chamber 410 for continued mixing. Once the ingredients have been mixed for a predetermined amount of time (e.g. so as to provide a first mixture), for example, the mixing arrangement 430 may then be switched to the second mode, wherein the motor 432 is controlled to rotate the elongated member 430 in a second, opposite direction of rotation so that the threaded portion 436 moves mixture along the internal volume of the cylinder 434 (e.g. by moving mixture in a direction away from mixing portion 435 of the elongated member 430 and towards the perforated plate 440) and urges the mixture against the perforated plate 440.

When urged against the perforated plate 440, mixture from the chamber 410 is extruded so as to form a first extruded mixture.

The pasta maker 400 further comprises a mixture re-supply arrangement 460 adapted to receive the first extruded mixture 450 from the first perforated plate 440 and to provide the first extruded mixture 450 back to the first chamber 410. The mixture re-supply arrangement is thus adapted to provide automatic delivery of first extruded mixture 450 back to the chamber 410, so that the first extruded mixture 450 can be mixed and extruded once again (i.e. for a second time). This avoids the need for a user to manually re-supply or re-feed extruded mixture 450 back to the chamber 410 of the pasta maker.

Here, the mixture re-supply arrangement 460 comprises a sloped surface that is adapted to cause first extruded mixture to move (under the force of gravity for example) back into the chamber 410 (via an aperture formed in the chamber 410), as illustrated by the arrow labelled "F".

Alternative embodiments may, however, employ different arrangements and/or mechanisms for providing extruded mixture back to the first chamber 410. For example, a passage or tube may be connected between the exit side of the perforate plate and the input orifice or aperture 420 of the chamber 410. Means for conveying extruded mixture along the passage or tube may be implemented so as to automatically move mixture within the passage/tube, such as a screw, conveyer belt, pump, etc.

Although embodiments described above have related to pasta making devices, it is to be understood that embodiments of the proposed invention may also relate to methods of operating a pasta maker. For example, according to an embodiment, a method of operating a pasta maker for making vegetable-supplemented pasta comprises the steps of: receiving vegetable-supplemented pasta ingredients in a first chamber of the pasta maker; operating a first mixing arrangement of the pasta maker to mix the vegetable-supplemented pasta ingredients received in the first chamber so as to form a first mixture; extruding the first mixture through a first perforated plate of the pasta maker; receiving, via the first perforated plate, first extruded mixture in a second chamber of the pasta maker; and extruding the first extruded mixture received in the second chamber through a second perforated plate so as to form a second extruded pasta mixture.

It will be appreciated that the method detailed in the preceding paragraph relates to operating a pasta maker having two chambers. According to another embodiment, there may be provided a method of operating a pasta maker having a single chamber (e.g. an embodiment wherein the first and second chambers are one and the same). Such a method comprises the steps of: receiving vegetable-supplemented pasta ingredients in the chamber of the pasta maker; operating a mixing arrangement of the pasta maker to mix the vegetable-supplemented pasta ingredients received in the chamber so as to form a first mixture; extruding the first mixture through a perforated plate of the pasta maker; operating a mixture re-supply arrangement of the pasta maker so as to provide the extruded first mixture back to the chamber; operating the mixing arrangement of the pasta maker to mix re-supplied extruded first mixture so as to form a second mixture; and extruding the second mixture through the perforated plate of the pasta maker, so as to form a second extruded pasta mixture.

Furthermore, a computer program product may be provided which comprises a computer-readable storage medium having computer-readable program code embodied therewith. The computer-readable program code can be configured to perform all of the steps of a method according to a proposed embodiment (such as the methods described in the preceding two paragraphs, for example).

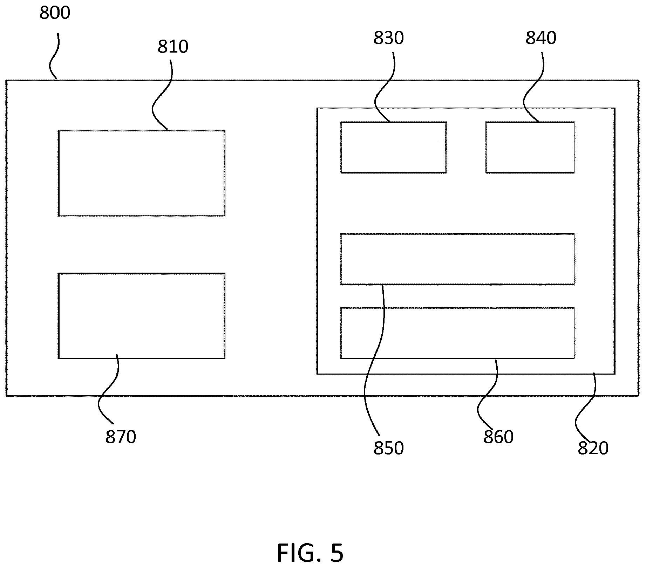

By way of yet further example, Figure 5 illustrates an example of a computer 800 within which one or more parts of a proposed embodiment may be employed. Various operations discussed above may utilize the capabilities of the computer 800. For example, one or more parts of a component or system for controlling a pasta maker may be incorporated in any element, module, application, and/or component discussed herein.

The computer 800 includes, but is not limited to, PCs, workstations, laptops, PDAs, palm devices, servers, storages, and the like. Generally, in terms of hardware architecture, the computer 800 may include one or more processors 810, memory 820, and one or more I/O devices 870 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 810 is a hardware device for executing software that can be stored in the memory 820. The processor 810 can be virtually any custom made or commercially available processor, a central processing unit (CPU), a digital signal processor (DSP), or an auxiliary processor among several processors associated with the computer 800, and the processor 810 may be a semiconductor based microprocessor (in the form of a microchip) or a microprocessor.

The memory 820 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 820 may incorporate electronic, magnetic, optical, and/or other types of storage media. Note that the memory 820 can have a distributed architecture, where various components are situated remote from one another, but can be accessed by the processor 810.

The software in the memory 820 may include one or more separate programs, each of which comprises an ordered listing of executable instructions for implementing logical functions. The software in the memory 820 includes a suitable operating system (O/S) 850, compiler 840, source code 830, and one or more applications 860 in accordance with exemplary embodiments. As illustrated, the application 860 comprises numerous functional components for implementing the features and operations of the exemplary embodiments. The application 860 of the computer 800 may represent various applications, computational units, logic, functional units, processes, operations, virtual entities, and/or modules in accordance with exemplary embodiments, but the application 860 is not meant to be a limitation.

The operating system 850 controls the execution of other computer programs, and provides scheduling, input-output control, file and data management, memory management, and communication control and related services. It is contemplated by the inventors that the application 860 for implementing exemplary embodiments maybe applicable on all commercially available operating systems.

Application 860 maybe a source program, executable program (object code), script, or any other entity comprising a set of instructions to be performed. When a source program, then the program is usually translated via a compiler (such as the compiler 840), assembler, interpreter, or the like, which may or may not be included within the memory 820, so as to operate properly in connection with the O/S 850. Furthermore, the application 860 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 870 may include input devices such as, for example but not limited to, a mouse, keyboard, scanner, microphone, camera, etc. Furthermore, the I/O devices 870 may also include output devices, for example but not limited to a printer, display, etc. Finally, the I/O devices 870 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 870 also include components for communicating over various networks, such as the Internet or intranet.

If the computer 800 is a PC, workstation, intelligent device or the like, the software in the memory 820 may further include a basic input output system (BIOS) (omitted for simplicity). The BIOS is a set of essential software routines that initialize and test hardware at startup, start the O/S 850, and support the transfer of data among the hardware devices. The BIOS is stored in some type of read-only-memory, such as ROM, PROM, EPROM, EEPROM or the like, so that the BIOS can be executed when the computer 800 is activated.

When the computer 800 is in operation, the processor 810 is configured to execute software stored within the memory 820, to communicate data to and from the memory 820, and to generally control operations of the computer 800 pursuant to the software. The application 860 and the O/S 850 are read, in whole or in part, by the processor 810, perhaps buffered within the processor 810, and then executed.

When the application 860 is implemented in software it should be noted that the application 860 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 860 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The description has been presented for purposes of illustration and description, and is not intended to be exhaustive or limited to the invention in the form disclosed. Many modifications and variations will be apparent to those of ordinary skill in the art. Embodiments have been chosen and described in order to best explain principles of proposed embodiments, practical application(s), and to enable others of ordinary skill in the art to understand various embodiments with various modifications are contemplated.

## Claims

1. A pasta maker (200) for making vegetable-supplemented pasta, wherein the pasta maker comprises:
a first chamber (205) adapted to receive vegetable-supplemented pasta ingredients;
a first mixing arrangement (215) provided in the first chamber and adapted to mix vegetable-supplemented pasta ingredients received in the first chamber so as to form a first mixture;
a first perforated plate (260) through which first mixture from the first chamber is adapted to be extruded so as to form a first extruded mixture;
a second chamber (270) adapted to receive first extruded mixture; and
a second perforated plate (310) through which first extruded mixture from the second chamber is adapted to be extruded so as to form a second extruded pasta mixture.

2. The pasta maker of claim 1, wherein the first mixing arrangement (215) comprises a rotatable member (215) having a mixing portion (240) and a threaded portion (245), the mixing portion comprising one or more protrusions (250) for mixing vegetable-supplemented pasta ingredients through rotation of the rotatable member, and the threaded portion comprising a helical flange (255) for urging the first mixture in a direction towards the first perforated plate through rotation of the rotatable member.

3. The pasta maker of claim 1 or 2, wherein the first chamber (205) comprises first and second sections, and wherein the first mixing arrangement (215) is adapted to mix vegetable-supplemented pasta ingredients in the first section and to urge the first mixture to the second section and against the first perforated plate (260).

4. The pasta maker of claim 3, wherein the first mixing arrangement (215) is adapted to be operable in a first mode, wherein the first mixing arrangement is adapted to mix vegetable-supplemented pasta ingredients in the first section, and a second mode, wherein the first mixing arrangement is adapted to urge the first mixture to the second section and against the first perforated plate (260).

5. The pasta maker of claim 4, wherein the rotatable member (215) is adapted to rotate in a first direction of rotation when the first mixing arrangement is in the first mode and to rotate in a second, opposite direction of rotation when the first mixing arrangement is in the second mode.

6. The pasta maker of any preceding claim, further comprising a second mixing arrangement (275) provided in the second chamber and adapted to mix first extruded mixture received in the second chamber,
wherein the second chamber (270) comprises third and fourth sections, and wherein the second mixing arrangement (275) is adapted to mix first extruded mixture received in the second chamber and to urge the second mixture to the fourth section and against the second perforated plate (310).

7. The pasta maker of claim 6, wherein the second mixing arrangement (275) comprises a second rotatable member (275) having a mixing portion (290) and a threaded portion (295), the mixing portion comprising one or more protrusions (300) for mixing first extruded mixture through rotation of the second rotatable member, and the threaded portion comprising a helical flange (305) for urging the second mixture in a direction towards the fourth section or second perforated plate (310) through rotation of the second rotatable member.

8. The pasta maker of any preceding claim,
wherein the first and second chambers are the same chamber and the first and second perforated plates are the same perforated plate,
and further comprising a mixture re-supply arrangement (460) adapted to receive first extruded mixture from the first perforated plate and to provide the first extruded mixture back to the first chamber such that the first chamber performs the technical function of the second chamber and the first perforated plate performs the technical function of the second perforated plate.

9. The pasta maker of any preceding claim further comprising a steaming unit (320) adapted to steam at least one of the received vegetable-supplemented pasta ingredients.

10. The pasta maker of any preceding claim further comprising a weight sensing unit (330) adapted to weigh received vegetable-supplemented pasta ingredients and to provide an output signal representative of the sensed weight of received vegetable-supplemented pasta ingredients.

11. The pasta maker of claim 10, further comprising a fluid supply unit (340) adapted to supply fluid to the first chamber (205) based on an output signal from the weight sensing unit (330) and a predetermined target ratio of vegetable-supplemented pasta ingredients.

12. The pasta maker of claim 11, wherein the fluid supply unit (340) is adapted to determine an amount of water in vegetable-supplemented pasta ingredients received in the first chamber (205) based on an output signal from the weight sensing unit (330), and to supply fluid to the first chamber based on the determined amount of water in vegetable-supplemented pasta ingredients received in the first chamber and the predetermined target ratio of vegetable-supplemented pasta ingredients.

13. The pasta maker of claim 11 or 12, wherein the predetermined target ratio of vegetable-supplemented pasta ingredients comprises a ratio of a flour to water in the range of 2.4:1 - 3.2:1, and preferably equal to 250:90.

14. A method of operating a pasta maker for making vegetable-supplemented pasta, the pasta maker comprising:
a first chamber (205) having a first mixing arrangement (215) provided therein;
a first perforated plate (260) through which first mixture from the first chamber is adapted to be extruded;
a second chamber (270) adapted to receive first extruded mixture via the first perforated plate; and
a second perforated plate (310) through which first extruded mixture from the second chamber is adapted to be extruded,
wherein the method comprises:
receiving (130) vegetable-supplemented pasta ingredients in the first chamber;
operating (140) the first mixing arrangement to mix the vegetable-supplemented pasta ingredients received in the first chamber so as to form a first mixture;
extruding (150) the first mixture through the first perforated plate;
receiving (160), via the first perforated plate, first extruded mixture in the second chamber; and
extruding (170) the first extruded mixture received in the second chamber through the second perforated plate so as to form a second extruded pasta mixture.

15. A computer program product for operating a pasta maker for making vegetable-supplemented pasta, the pasta maker comprising: a first chamber having a first mixing arrangement provided therein; a first perforated plate through which first mixture from the first chamber is adapted to be extruded; a second chamber adapted to receive first extruded mixture via the first perforated plate; and a second perforated plate through which first extruded mixture from the second chamber is adapted to be extruded, wherein the computer program product comprises a computer-readable storage medium having computer-readable program code embodied therewith, the computer-readable program code configured to perform all of the steps of claim 14.
